# FASCICULE DE BREVET EUROPEEN

(11) **EP 0 811 519 B1**
(45) Date de publication et mention de la délivrance du brevet: **25.07.2001**
(21) Numéro de dépôt: 97401041.5
(22) Date de dépôt: 09.05.1997
(51) Int. Cl.: B60K 15/04, F16J 15/32

(54) **Réservoir de carburant ayant un corps en matière plastique et un joint d'étanchéité**
Kraftstofftank aus Kunststoff und Dichtring
Fuel tank made of plastic and sealing joint

(30) Priorité: 04.06.1996 FR 9606860
(43) Date de publication de la demande: 10.12.1997
(73) Titulaire: LE JOINT FRANCAIS, Société en Nom Collectif, F-75008 Paris (FR)
(72) Inventeur: Voirol, Bernard, 95240 Cormeilles En Parisis (FR)
(74) Mandataire: Jacquard, Philippe Jean-Luc

(56) Documents cités:
- EP-A- 0 379 401
- FR-A- 2 596 333
- GB-A- 1 146 768
- US-A- 3 322 432

## Description

La présente invention a pour objet un réservoir de carburant présentant un corps de réservoir présentant un col ayant un axe, le col étant prolongé par une région de section inférieure à celle du col, une platine, et un écrou vissé sur le col du réservoir, un bord supérieur du col, un bord inférieur de la platine, une face cylindrique externe de la région annulaire et une face cylindrique interne de l'écrou définissant un logement annulaire pour un joint, le réservoir étant en matière plastique.

Dans le cadre de l'amélioration de l'étanchéité des véhicules, de nouvelles normes sont en préparation, sous la dénomination EURO 2000, et conduisent à des modifications et à des optimisations des étanchéités.

Dans le cas des réservoirs de carburant, plusieurs constructeurs se sont orientés vers la mise en oeuvre de joints toriques en tant que joints de bonde voir document FR-A-2 596 333, qui forme la base du préambule de la revendication 1.

Cependant, la mise en oeuvre de tels joints conduit à deux types de problèmes, en particulier dans le cas des réservoirs ayant un corps de réservoir en matière plastique par exemple en polyéthylène :
a) les tolérances des pièces en matière plastique conduisent à des joints ayant un diamètre au moins égal à environ 5 mm, et il en résulte un problème d'encombrement pour le logement du joint, et de déformation du col du réservoir ;
b) il existe un problème de maintien du joint sur le rebord du réservoir avant la mise en place de la bonde.

Certains véhicules sont équipés de joints de bonde qui présentent des lèvres qui assurent une fonction de rattrapage de jeu au prix d'une complication plus grande en ce qui concerne le profil du joint, et notamment en ce qui concerne son moulage.

On connaît également du document US-A-3 222 432 un joint d'étanchéité pour remontoir de montre qui présente une face d'étanchéité cylindrique en contact avec une tige. Le serrage est réalisé radialement pour appuyer cette face sur la tige, et obtenir une étanchéité dynamique.

La présente invention a pour objet un réservoir permettant d'éviter au moins le problème a) mentionné ci-dessus. L'invention concerne ainsi un réservoir de carburant tel que défini dans la revendication 1. Il permet d'obtenir une étanchéité statique avec un serrage axial du joint.

La mise en oeuvre d'un tel joint permet en outre d'économiser de la matière par rapport à un joint torique, d'où un coût plus réduit.

Le problème b) peut être également évité par le fait que le joint présente une face cylindrique qui porte contre la face cylindrique externe de la région annulaire.

Il est particulièrement avantageux que le profil du joint s'inscrive à l'intérieur du profil d'un joint torique dont le diamètre correspond au logement.

La face du joint qui est dirigée vers la face cylindrique interne de l'écrou est avantageusement convexe. Le joint peut présenter au moins sur une majeure partie de la distance entre le bord inférieur de la platine et le bord supérieur du col, une largeur, prise perpendiculairement audit axe, permettant de diminuer sa perméabilité aux vapeurs des combustibles que le réservoir est destiné à contenir.

L'invention concerne également une utilisation dans un réservoir de carburant telle que définie à la revendication 10.

Le joint peut présenter au moins une face cylindrique et/ou au moins une face annulaire plane. La face du joint qui est dirigée vers a face cylindrique interne de l'écrou est de préférence convexe.

D'autres caractéristiques et avantages de l'invention apparaîtront mieux à la lecture de la description qui va suivre, donnée à titre d'exemple non limitatif, en liaison avec les dessins ci-annexés dans lesquels :
- la figure 1 représente un réservoir présentant un joint de bonde qui est torique, dans le cas d'un logement au minimum de la tolérance ;
- la figure 2 représente un réservoir présentant un joint de bonde selon l'invention, dans le cas d'un logement au minimum de la tolérance ;
- la figure 3a représente en coupe un joint selon l'invention ;
- la figure 3b représente la superposition des profils d'un joint torique de diamètre nominal correspondant à un logement de réservoir, et d'un joint selon l'invention correspondant au même logement ;
- les figures 4a et 4b illustrent le problème du roulement d'un joint torique, et la figure 5 illustre le comportement d'un joint selon un mode de réalisation particulièrement avantageux de l'invention ;
- la figure 6 représente en coupe une variante préférée du joint représenté à la figure 3a.

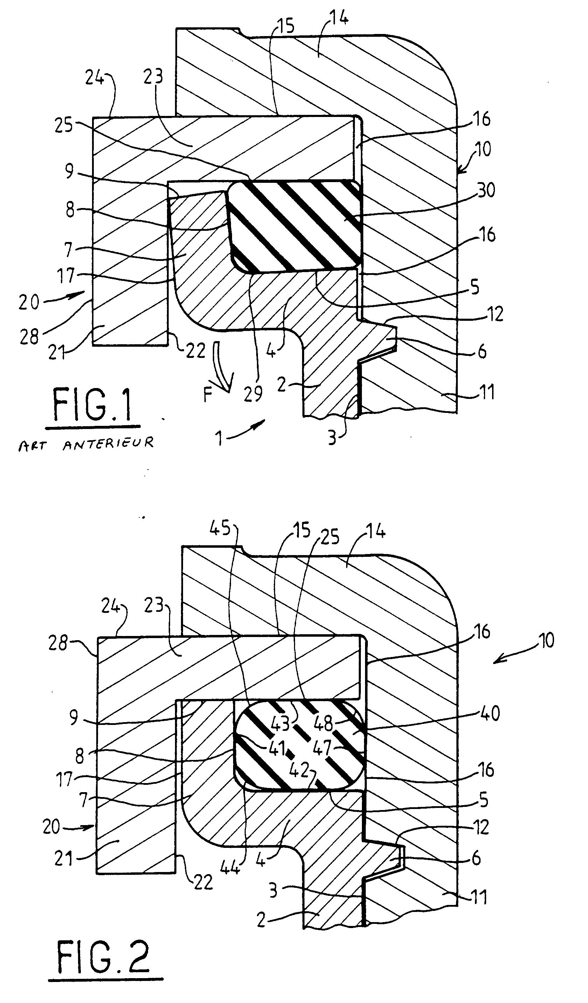

Comme le montrent les figures 1 et 2, un réservoir en matière plastique, désigné par le repère général 1, par exemple un réservoir en polyéthylène, présente un col 2 de forme générale cylindrique présentant une surface cylindrique externe 3 pourvue d'un filetage 6 en vue du vissage d'un écrou 10 pourvu sur sa face cylindrique interne 16 d'un filetage complémentaire 12.

Le col 2 présente un bord interne 4 présentant une face supérieure annulaire plane 5. Une région cylindrique 7 bordant la face 5 prolonge vers le haut le bord interne 4. La région 7 a une section inférieure à celle du col 2. Elle présente un bord supérieur 9 et une face cylindrique externe 8 qui jouxte la face plane 5 et une face cylindrique interne 17. Une platine 20 présente en coupe un profil en L à deux branches, à savoir une branche 23 ayant une face supérieure annulaire 24 et une face inférieure annulaire 25 et une branche 21 disposée perpendiculairement à la branche 23 et ayant une face cylindrique externe 22 et une face cylindrique interne 28.

La platine 20 est bloquée par l'écrou 10 qui vient en appui par sa face 15 sur la face 23 de la platine 20, de manière que la face 25 s'appuie sur le bord supérieur 9 de la région 7. Les faces annulaires 5 et 25 et les faces cylindriques 8 et 16 définissent un logement pour un joint.

Les dimensions d'un joint doivent être choisies pour que son taux de serrage soit compris entre 5% et 25% selon que les tolérances du logement sont maximales ou minimales.

Etant donné la dispersion des cotes qui est due aux matériaux employés dans l'application envisagée (réservoirs de carburant), le volume du logement ou gorge tend à être trop petit. En effet, la dispersion des cotes implique la mise en oeuvre d'un joint torique 30 de diamètre au moins égal à environ 5 mm (pour respecter la condition précitée relative au taux de serrage) et qui présente un bord d'appui supérieur, un bord d'appui inférieur, un bord d'appui extérieur et un bord d'appui intérieur, ces bords étant ponctuels avant la mise en compression du joint, mais tendant à s'aplatir ensuite. Dans le cas où les tolérances sont à leur valeur minimale, le joint torique 30 occupe toute la surface du logement et tend à déformer la région 7 (fig. 1) comme indiqué par la flèche F. La région 7 n'est plus parallèle à l'axe du col 2, et le bord 9 est écarté de la face 25. Ceci est préjudiciable à la tenue mécanique et à l'étanchéité du dispositif. En outre, le montage et le démontage sont rendus malaisés.

La mise en oeuvre d'un joint 40 dont le profil est allongé selon l'axe du col 2 permet de remédier au moins en grande partie à cet inconvénient, comme le montre la figure 2.

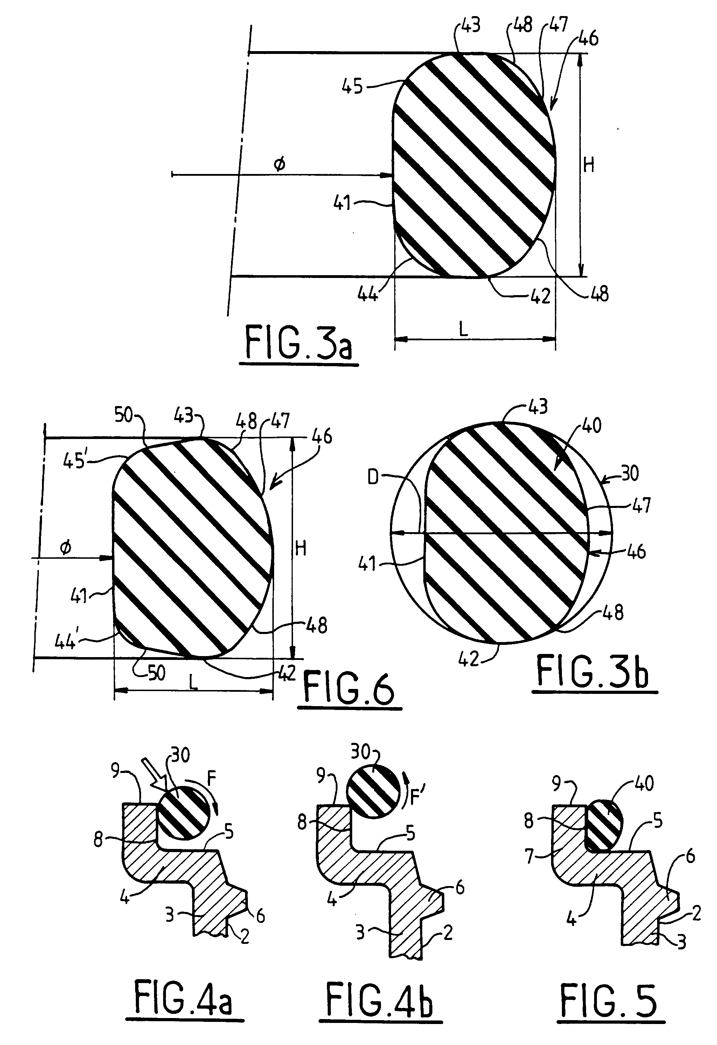

Le joint 40, dont un mode de réalisation particulièrement avantageux est représenté à la figure 3a, présente une hauteur H prise parallèlement à l'axe du col 2, et une largeur maximale L prise perpendiculairement à ce même axe, avec H>L.

Il comporte une face interne cylindrique 41 en contact avec la face 8, deux faces planes, inférieure 42 en contact avec la face 5 et supérieure 43 en contact avec la face 25. La région 46 est convexe et présente une partie centrale 47 qui se raccorde en 48 avec les faces 42 et 43. Les faces 41 et 42 sont raccordées entre elles par une région convexe 44, et les faces 41 et 43 sont raccordées entre elles par une région convexe 45.

La présente d'une face cylindrique plate 41 permet d'éviter le phénomène de roulement et d'extraction du joint 40. Ce phénomène est illustré aux figures 4a et 4b dans le cas d'un joint torique 30. Si le joint torique 30 est monté avec une extension suffisante pour son maintien dans la gorge, il tend alors à rouler sur lui-même dans le sens de la flèche F lors de sa mise en place. Il tend de ce fait à revenir à sa position initiale sous l'effet de l'élasticité en roulant en sens contraire dans le sens de la flèche F' (fig. 4b). Avec un joint 40 de forme allongée (H > L), présentant une face cylindrique 41, le phénomène de roulement est évité, le joint 40 étant mis en place en extension autour de la face 8.

La mise en oeuvre d'un joint 40 permet en outre de réduire le volume de caoutchouc utilisé, qui est en général du fluocarbone, matériau coûteux compatible avec les carburants.

La largeur L (L < H) et la forme de la région convexe 46 sont choisies de manière à éviter que les vapeurs de carburant ne traversent le joint 40 par perméabilité.

Le profil du joint 40 est de préférence tel qu'il s'inscrive dans le profil du joint torique 30, c'est-à-dire que H = D et L < D.

EXEMPLE pour une gorge 8 de diamètre 126 mm.
a) JOINT 30 :
   diamètre intérieur Ø = 125 mm (mauvais maintien) D = 5 mm
b) JOINT 40 :
   Ø = 123 mm (meilleur maintien)
   H = 5 mm
   L = 4 mm

La figure 6 représente une variante du joint de la figure 3a, ayant une géométrie permettant de diminuer la pression axiale du joint sur son diamètre intérieur, et permettant en conséquence de réduire les déformations résiduelles du col du réservoir en réduisant les contraintes du joint 40 sur le col du réservoir, notamment dans la région 29 située au voisinage du diamètre intérieur du logement du joint (voir fig.1). Ce résultat est obtenu à l'aide d'au moins une région 50 de forme aplatie et de préférence plate, qui raccorde les faces 41 et 42 d'une part, et/ou les faces 41 et 43 d'autre part, éventuellement par l'intermédiaire de régions convexes 44' et 45', et qui diminuent la hauteur du joint au fur et à mesure que l'on se rapproche de la face interne 41 du joint.

## Revendications

1. Réservoir de carburant présentant un corps de réservoir présentant un col (2) ayant un axe, le col étant prolongé par une région (7) de section inférieure à celle du col, une platine (20), et un écrou (10) vissé sur le col (2) du réservoir, un bord supérieur (5) du col (2), un bord inférieur (25) de la platine (20), une face cylindrique externe (8) de la région annulaire (7) et une face cylindrique interne (16) de l'écrou (10) définissant un logement annulaire pour un joint présentant un bord supérieur, un bord inférieur, un bord extérieur et un bord interne, le bord inférieur (25) de la platine (20) venant en appui sur le bord supérieur du joint pour le comprimer parallèlement audit axe, le réservoir étant en matière plastique caractérisé en ce que, à l'état non comprimé, le joint (40) présente en coupe un profil allongé parallèlement audit axe.

2. Réservoir selon la revendication 1 caractérisé en ce que le bord interne du joint (40) présente une face cylindrique (41) qui porte contre la face cylindrique externe (8) de la région annulaire (7).

3. Réservoir selon une des revendications 1 ou 2 caractérisé en ce que le profil du joint (40) s'inscrit à l'intérieur du profil d'un joint torique (30) dont le diamètre (D) correspond au logement.

4. Réservoir selon une des revendications précédentes caractérisé en ce que le bord supérieur du joint (40) présente une face supérieure annulaire plane (43) portant contre le bord inférieur (25) de la platine (20).

5. Réservoir selon une des revendications précédentes caractérisé en ce que le bord inférieur du joint (40) présente une face inférieure annulaire plane (42) portant contre le bord supérieur (5) du col (2, 4).

6. Réservoir selon une des revendications précédentes caractérisé en ce que le bord externe (46) du joint (40) qui est dirigé vers la face cylindrique interne (16) de l'écrou (10) est convexe.

7. Réservoir selon une des revendications précédentes caractérisé en ce que le joint (40) présente, au moins sur une majeure partie de la distance entre le bord inférieur (25) de la platine (20) et le bord supérieur (9) du col (2, 4), une largeur, prise perpendiculairement audit axe, permettant d'éviter une perméabilité aux vapeurs des combustibles que le réservoir est destiné à contenir.

8. Réservoir selon une des revendications précédentes caractérisé en ce que le joint (40) présente au moins une région aplatie (50) raccordant le bord inférieur (42) du joint (40) au bord interne (41) du joint.

9. Réservoir selon une des revendications précédentes caractérisé en ce que le joint (40) présente au moins une région aplatie (50) raccordant le bord supérieur (43) du joint (40) au bord interne (41) du joint (40).

10. Utilisation dans un réservoir de carburant présentant un corps de réservoir en matière plastique présentant un col ayant un axe, le col étant prolongé par une région annulaire (7) de section inférieure à celle du col, une platine (20) et un écrou (10) vissé sur le col, un bord supérieur (5) du col, un bord inférieur (25) de la platine (20), une face cylindrique externe (8) de la région annulaire (7) et une face cylindrique interne (16) de l'écrou (10) définissant un logement pour un joint, et dans lequel le bord inférieur (25) de la platine (20) vient en appui sur le bord supérieur du joint pour le comprimer parallèlement audit axe, d'un joint (40) présentant, à l'état non comprimé, en coupe un profil allongé parallèlement audit axe.

11. Utilisation selon la revendication 10 caractérisée en ce que le joint (40) présente au moins une face cylindrique (41) et/ou des faces annulaires planes (42, 43).

12. Utilisation selon la revendication 11 caractérisée en ce que la face (46) du joint (40) qui est dirigée vers la face cylindrique interne (16) de l'écrou (10) est convexe.

## Claims

1. A fuel tank presenting a tank body having a neck (2) about an axis, the neck being extended by a region (7) of section smaller than that of the neck, a plate (20), and a nut (10) screwed onto the neck (2) of the tank, an annular housing for a gasket being defined by a top edge (5) of the neck (2), a bottom edge (25) of the plate (20), an outer cylindrical plate (8) of the annular region (7), and an inner cylindrical face (16) of the nut (10), the gasket having a top edge, a bottom edge, an outer edge, and an inner edge, the bottom edge (25) of the plate (20) bearing against the top edge of the gasket to compress it parallel to said axis, and the tank being made of plastics material, characterized in that, in the non-compressed state, the gasket (40) has, in section, a profile that is elongate parallel to said axis.

2. A tank according to claim 1, characterized in that the inner edge of the gasket (40) has a cylindrical face (41) which bears against the outer cylindrical face (8) of the annular region (7).

3. A tank according to claim 1 or 2, characterized in that the profile of the gasket (40) is inscribed inside the profile of a torodial O-ring (30) whose diameter (D) correspond to the housing.

4. A tank according to any preceding claim, characterized in that the top edge of the gasket (40) has a plane annular top face (43) bearing against the bottom edge (25) of the plate (20).

5. A tank according to any preceding claim, characterized in that the bottom edge of the gasket (40) has a plane annular bottom face (42) bearing against the top edge (5) of the neck (2, 4).

6. A tank according to any preceding claim, characterized in that the outer edge (46) of the gasket (40) which faces towards the inner cylindrical face (16) of the nut (10) is convex.

7. A tank according to any preceding claim, characterized in that the gasket (40) presents, at least over a major portion of the distance between the bottom edge (25) of the plate (20) and the top edge (9) of the neck (2, 4), a width measured perpendicularly to said axis that serves to prevent the gasket being permeable to vapors of the fuels that the tank is designed to contain.

8. A tank according to any preceding claim, characterized in that the gasket (40) has at least one flattened region (50) connecting the bottom edge (42) of the gasket (40) to the inner edge (41) of the gasket.

9. A tank according to any preceding claim, characterized in that the gasket (40) has at least one flattened region (50) connecting the top edge (43) of the gasket (40) to the inner edge (41) of the gasket (40).

10. The use of a gasket (40) in a fuel tank having a tank body of plastics material with a neck having an axis, the neck being extended by an annular region (7) of smaller annular section than the neck, a plate (20), and a nut (10) screwed on the neck, a housing for a gasket being defined by a top edge (5) of the neck, a bottom edge (25) of the plate (20), an outer cylindrical face (8) of the annular region (7), and an inner cylindrical face (16) of the nut (10), and in which the bottom edge (25) of the plate (20) bears against the top edge of the gasket to compress it parallel to said axis, which gasket (40), in the non-compressed state, has, in section, a profile that is elongate parallel to said axis.

11. A use according to claim 10, characterized in that the gasket (40) presents at least one cylindrical face (41) and/or plane annular faces (42, 43).

12. A use according to claim 11, characterized in that the face (46) of the gasket (40) which faces the inner cylindrical face (16) of the nut (10) is convex.

## Patentansprüche

1. Kraftstoffreservoir, das einen Reservoirkörper, der einen Hals (2) aufweist, welcher eine Achse hat, wobei der Hals durch einen Bereich (7) von kleinerem Querschnitt, als es jener des Halses ist, verlängert ist, sowie eine Platte (20) und eine auf den Hals (2) des Reservoirs geschraubte Mutter (10) aufweist, wobei einE obere Begrenzung (5) des Halses (2), eine untere Begrenzung (25) der Platte (20), eine äußere zylindrische Fläche (8) des ringförmigen Bereichs (7) und eine innere zylindrische Fläche (16) der Mutter (10) einen ringförmigen Sitz für eine Dichtung begrenzen, die eine obere Begrenzung, eine untere Begrenzung, eine äußere Begrenzung und eine innere Begrenzung aufweist, wobei die untere Begrenzung (25) der Platte (20) in Anlage an die obere Begrenzung der Dichtung kommt, um sie parallel zu der genannten Achse zusammenzudrücken, wobei das Reservoir aus Kunststoff ist, dadurch **gekennzeichnet**, daß die Dichtung (40) im nicht zusammengedrückten Zustand im Querschnitt ein parallel zu der genannten Achse gestrecktes bzw. längliches Profil aufweist.

2. Reservoir gemäß Anspruch 1, dadurch **gekennzeichnet,** daß die innere Begrenzung der Dichtung (40) eine zylindrische Fläche (41) aufweist, welche gegen die äußere zylindrische Fläche (8) des ringförmigen Bereichs (7) anliegt.

3. Reservoir gemäß Anspruch 1 oder 2, dadurch **gekennzeichnet,** daß das Profil der Dichtung (40) in das Innere des Profils einer torusförmigen Dichtung (30), deren Durchmesser (D) dem Sitz entspricht, einbeschrieben ist.

4. Reservoir gemäß einem der vorhergehenden Ansprüche, dadurch **gekennzeichnet**, daß die obere Begrenzung der Dichtung (40) eine plane obere ringförmige Fläche (43) aufweist, die gegen die untere Begrenzung (25) der Platte (20) anliegt.

5. Reservoir gemäß einem der vorhergehenden Ansprüche, dadurch **gekennzeichnet**, daß die untere Begrenzung der Dichtung (40) eine untere ringförmige plane Fläche (42) aufweist, die gegen die obere Begrenzung (5) des Halses (2) anliegt.

6. Reservoir gemäß einem der vorhergehenden Ansprüche, dadurch **gekennzeichnet**, daß die äußere Begrenzung (46) der Dichtung, die nach der inneren zylindrischen Fläche (16) der Mutter (10) gerichtet ist, konvex ist.

7. Reservoir gemäß einem der vorhergehenden Ansprüche, dadurch **gekennzeichnet**, daß die Dichtung (40) wenigstens auf einem größeren Teil der Strecke zwischen der unteren Begrenzung (25) der Platte (20) und der oberen Begrenzung (9) des Halses (2, 4) eine Breite, genommen senkrecht zu der genannten Achse, aufweist, die es gestattet, eine Durchlässigkeit für Dämpfe von brennbaren Substanzen, die das Reservoir zu enthalten bestimmt ist, zu vermeiden.

8. Reservoir gemäß einem der vorhergehenden Ansprüche, dadurch **gekennzeichnet**, daß die Dichtung (40) wenigstens einen abgeflachten Bereich (50) aufweist, der die untere Begrenzung (42) der Dichtung (40) mit der inneren Begrenzung (41) der Dichtung verbindet.

9. Reservoir gemäß einem der vorhergehenden Ansprüche, dadurch **gekennzeichnet**, daß die Dichtung (40) wenigstens einen abgeflachten Bereich (50) aufweist, welcher die obere Begrenzung (43) der Dichtung (40) mit der inneren Begrenzung (41) der Dichtung (40) verbindet.

10. Verwendung einer Dichtung (40) in einem Kraftstoffreservoir, das einen Reservoirkörper aus Kunststoff, welcher einen Hals aufweist, der eine Achse hat, wobei der Hals durch einen ringförmigen Bereich (7) von kleinerem Querschnitt, als es jener des Halses ist, verlängert ist, sowie eine Platte (20) und eine auf den Hals geschraubte Mutter (10) aufweist, wobei eine obere Begrenzung (5) des Halses, eine untere Begrenzung (25) der Platte (20), eine zylindrische äußere Fläche (8) des ringförmigen Bereichs (7) und eine innere zylindrische Fläche (16) der Mutter (10) einen Sitz für eine Dichtung begrenzen, und in welchem die untere Begrenzung (25) der Platte (20) in Anlage gegen die obere Begrenzung der Dichtung kommt, um sie parallel zu der genannten Achse zusammenzudrücken, welche Dichtung im nichtzusammengedrückten Zustand im Querschnitt ein parallel zu der genannten Achse gestrecktes bzw. längliches Profil aufweist.

11. Verwendung gemäß Anspruch 10, dadurch **gekennzeichnet,** daß die Dichtung (40) wenigstens eine zylindrische Fläche (41) und/oder plane ringförmige Flächen (42, 43) aufweist.

12. Verwendunng gemäß Anspruch 11, dadurch **gekennzeichnet,** daß die Fläche (46) der Dichtung (40), die nach der inneren zylindrischen Fläche (16) der Mutter (10) zu gerichtet ist, konvex ist.
